Europäisches Patentamt

European Patent Office

Office européen des brevets

(19)

(11) **EP 0 995 304 B1**

(12) **EUROPEAN PATENT SPECIFICATION**

(45) Date of publication and mention
of the grant of the patent:
**02.01.2003 Bulletin 2003/01**

(51) Int Cl.[7]: **H04N 1/00**

(86) International application number:
**PCT/FI98/00527**

(21) Application number: **98925690.4**

(22) Date of filing: **17.06.1998**

(87) International publication number:
**WO 99/001979 (14.01.1999 Gazette 1999/02)**

(54) **VIDEO IMAGE BAND ADJUSTMENT METHOD, AND FILTER ARRANGEMENT**

ABSTIMMUNGSVERFAHREN FÜR VIDEOBILDBÄNDE UND FILTERVORRICHTUNG

PROCEDE D'AJUSTEMENT DE LA BANDE D'IMAGES VIDEO ET AGENCEMENT DE FILTRE

(84) Designated Contracting States:
**AT BE CH CY DE DK ES FI FR GB GR IE IT LI LU MC NL PT SE**

(30) Priority: **30.06.1997 FI 972816**

(43) Date of publication of application:
**26.04.2000 Bulletin 2000/17**

(73) Proprietor: **Elektrobit Oy**
**90570 Oulu (FI)**

(72) Inventors:
• **MUSTONEN, Juha**
**FIN-90100 Oulu (FI)**

• **SILVEN, Olli**
**FIN-90580 Oulu (FI)**

(74) Representative: **Karppinen, Olavi Arto et al**
**Kolster Oy Ab,**
**P.O. Box 148,**
**Iso Roobertinkatu 23**
**00121 Helsinki (FI)**

(56) References cited:
**US-A- 3 749 829          US-A- 4 047 221**
**US-A- 5 134 476**

• **PATENT ABSTRACTS OF JAPAN; & JP 08140095 A (MATSUSHITA ELECTRIC IND CO LTD) 31 May 1996.**

**Description**

FIELD OF THE INVENTION

The invention relates to a video image band adjustment method in which an image, composed of pixels, is subjected to at least pre-filtering, coding and storage in a buffer for further transmission, in which pre-filtering a reference value dependent on the pixel values in a pixel block associated with the pixel in location and/or in time is generated for the image pixel, and in which pre-filtering the filtered pixel value depends on the relation of the difference between the original pixel value and the generated reference value to a filtering threshold value.

The invention also relates to a filter arrangement for optimizing the amount of image information, the arrangement comprising a pre-filter, coding means and a buffer, which are arranged to perform at least pre-filtering, coding and storage in the buffer for the image, composed of pixels, for further transmission, the pre-filter being arranged to generate for the image pixel a reference value which is a function of the pixel values of a pixel block associated with the pixel in location and/or in time, and the filtered pixel value being a function of the difference between the original pixel value and the generated reference value and the filtering threshold value.

BACKGROUND OF THE INVENTION

The problem in transmitting digital video images are the wide bandwidth variations required by the bit stream generated by video coding. The variations are particularly wide when video coding techniques utilizing motion estimation are used. Usually a constant bandwidth has to be reserved for video transmission in practical implementations, whereby the video coding bit stream has to be adjusted at the cost of image quality.

Let us study briefly some prior art solutions by means of patent publications US 5,367,629, EP 0 396 846, US 4,691,233, US 4,700,226, US 4,047,221, US 5,134,476 and US 4,189,748.

Patent publication US 5,367,629 discloses a video image compression system wherein a pre-processing section comprises a median filter and an adaptive filter. On the basis of the buffer fill rate the compression system adjusts the bandwidth of the adaptive temporal filter in the pre-processing stage, the bandwidth of the spatial and temporal inner filter, and quantization.

Patent publication EP 0 396 846 discloses a DCT encoding device in which the bandwidth of a digital low-pass filter inserted before the DCT encoder is reduced as the buffer fill rate increases.

Patent publications US 4,691,233 and US 4,700,226 disclose a solution for adjusting decimation in an adaptive pulse code modulator according to the buffer fill rate.

Patent publication US 4,047,221 discloses a coding apparatus in which the attenuation and upper limit frequency of a comb filter coupled after an A/D converter are adjusted on the basis of the buffer fill rate.

Patent publication US 5,134,476 discloses a video signal encoding method in which the quantization step and/or the pre-filtering are adjusted according to the buffer fill rate.

Patent publication US 4,189,748 discloses a video bandwidth reduction system using two-dimensional transformation, in which an adaptive filter is used. The buffer fill rate is used to adjust a threshold, and the transform coefficients that fall below said threshold are eliminated.

However, prior art solutions have several drawbacks. The simplest method of saving band is not to transmit entire video images, but the variations in image frequency caused by this method cause the viewer much disturbance. In block-based video coding solutions based on DCT (Discrete Cosine Transform), the band is usually adjusted by changing quantization, i.e. reducing the accuracy of received DCT components, which, however, easily results in emphasized block limits which disturb the viewer. A version of the present solution is not to transmit the DCT components corresponding to higher frequencies and sometimes resulting from noise, but even this method leads to the same problems.

BRIEF DESCRIPTION OF THE INVENTION

Thus it is the object of the invention to provide a method and an apparatus implementing the method so as to solve the above problems. In spite of the available limited bandwidth, image frequency is not changed. When DCT is used, quantization does not have to changed either, and the transmission of high-frequency DCT components does not have to be limited.

This is achieved with a method of the type described in the introduction, characterized by changing the pre-filtering threshold value according to the buffer fill rate, enabling a constant video image frequency.

The filter arrangement of the invention, in turn, is characterized by comprising adjustment means arranged to change the pre-filter threshold value according to the buffer fill rate enabling a constant video image frequency.

The method and arrangement of the invention provide a plurality of advantages. The inventive solution enables continuous and rapid bandwidth adjustment without causing segmentation or changes in image frequency. Image signal noise can also be limited.

BRIEF DESCRIPTION OF THE INVENTION

In the following the invention will be described in greater detail by preferred embodiments with reference to the attached drawings, in which

Figure 1 shows an image signal transmission arrangement,
Figure 2 shows an image signal filtering arrangement, and
Figure 3 shows the efficiency of the inventive solution.

DETAILED DESCRIPTION OF THE INVENTION

The solution of the invention is particularly applicable to transferring digital video images, without, however, being restricted to it.

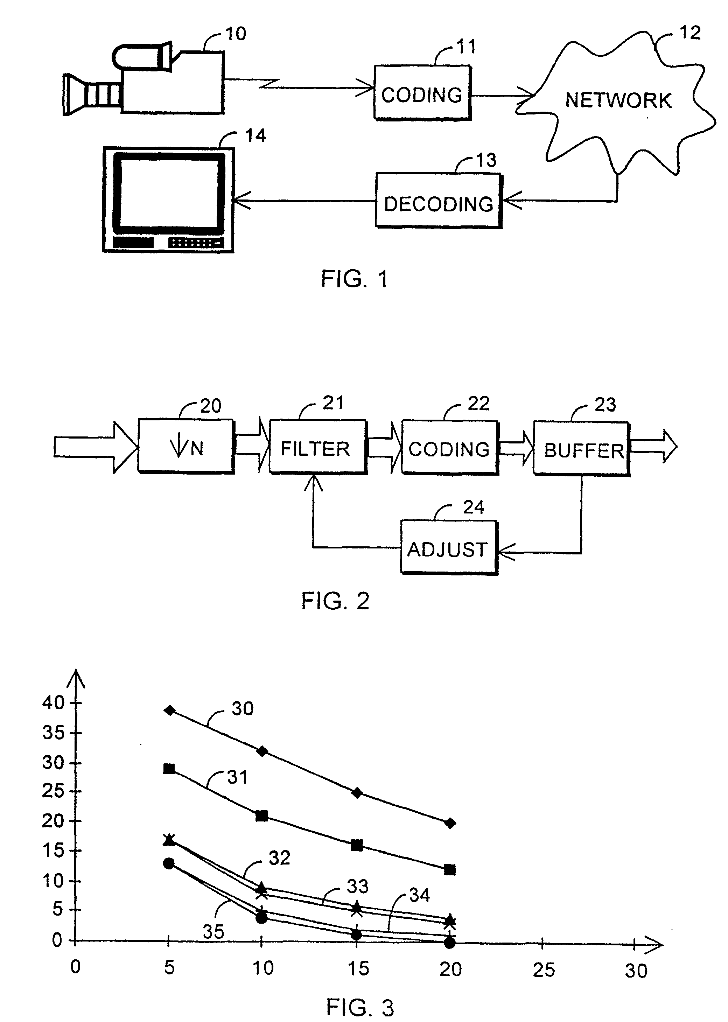

Figure 1 shows a typical video image transmission arrangement comprising a camera 10, compression means 11, a transmission network 12, decompression means 13, and a monitor 14. In the inventive solution the camera 10 is a usual monochrome or colour, analog or digital video camera. A signal propagates from the camera 10 to the compression means 11 which process the image signal digitally. With an analog camera 10, the signal is converted in the compression means 11, at the latest, by an A/D converter into digital form before compression. A digital video image usually comprises images generally sampled by a rectangular matrix at regular intervals. Thus a digital image is composed of a matrix of pixels, i.e. image samples. Because of analog television transmission, interleaved sampling is also used, in which either odd or even rows of the sampling matrix are transmitted alternately at successive moments of time. The resolution of a sampling matrix is not always the same vertically and horizontally. The compression means 11 compress the image information comprised by an image signal digitally so that it can be transmitted in the transmission network 12, which possibly has limited transmission capacity. The transmission network 12 is any known prior art cable network or radio network enabling image transmission. The image information propagates from the transmission network 12 to the decompression means 13 in which the image is decompressed, and the signal propagates further to the monitor 14 for displaying the image.

Let us study the image signal and its processing in more detail. Displaying colours is possible by using three numerical values of each pixel. The significance and properties of these numerical values vary according to the colour space used. The video camera 10 measures the amount of red (R), green (G) and blue (B) light being reflected from the target, thus using a prior art RGB colour space in sampling. For transmission and processing the image signal is usually transformed into another colour space. Since the display means, i.e, the monitor 14, generates the image by combining red, green and blue light, an inverse transformation is required at the end of the transmission chain on the side of the monitor 14.

A person's eyes are more sensitive to brightness than to colour information. Consequently image signal transmission generally employs a transformation of the YUV colour space in which more transmission band has been reserved for the luminance component (Y) than for colour difference information (U, V). The U and V components of the PAL system (Phase Alternation Line) are modulation axes of the sub-carriers of a colour coding system. Scaled and filtered colour difference signals B-Y and R-Y are used to modulate the PAL sub-carrier in the U and V axes. The eyes are also sensitive to slow spatial luminance variation. In an analog image signal, the vertical luminance information comprises double the number of details of the colour information. In a studio-quality digital image signal the colour difference information is consequently sampled vertically by half of the resolution of the luminance information. Often when a digital image is compressed, the horizontal resolution of the colour difference information is also dropped by half.

Very rapid spatial luminance variations, in turn, are probably noise. Modification components corresponding to high frequencies are consequently reduced in many codecs by what is known as pre-filtering to remove noise without blurring the edges of the image. Even strong filtering does not cause the eyes as distinctly observable artefacts than discarding the DCT components of block-based codecs.

Discrete cosine transform DCT resembles Fast Fourier Transform FFT. It transforms data between the time domain and the frequency domain, the transformation having a corresponding inverse transformation for restoring the original data. DCT is applied to the compression of an image. The DCT transformation is quite heavy computationally. For example, performing a two-dimensional DCT transformation for an 8 x 8 pixel block involves the following formula:

$$F(x) \;=\; \frac{1}{2}C(x)\sum_{i=0}^{N-1} f_i \cos\!\left(\frac{(2i+1)x\pi}{2N}\right), \; x \;=\; 0,\, 1,\, ...,\, 7,$$

where $f_i$ is pixel value of i, and

$$C(x) = \begin{cases} \dfrac{1}{\sqrt{2}} & \text{if } x \;=\; 0 \\ 1 & \text{otherwise} \end{cases}.$$

In MPEG-1 and MPEG-2 (Moving Picture Expert Group) video coding standards, for example, the correlation of adjacent pixels is utilized by dividing the image into 8 x 8 pixel blocks, which are subjected to DCT transformation. A few components with high values remain in the DCT-transformed block, whereas the values of the other components remain low. By quantization the low-value components are set to zero, whereby run-length encoding from low frequencies to high frequencies, combined with entropy encoding, generates a significantly smaller bit stream as compared with the original. MPEG standards utilize the temporal correlation between images by employing motion estimation to search for the best equivalents from the previous image for a 16 x 16 pixel macro-block of the present image and by transmitting only the motion vectors of the movement and the difference signal of the DCT transformation.

Besides DCT transformation, other known video coding methods can also be used in the inventive solution. The most operative video coding methods creatively combine several methods. Table 1 present different coding methods.

### Table 1. Image coding methods.

```
                                    ┌ still      ─ analysis/synthesis
                           ┌ model ─┤ picture   ┌ semantic
                           │        └ video ────┤
                           │                    └ object-based
                           │
                           │                                    ┌ pixel-      ── prediction
                           │                                    │ based
                           │                                    │            ┌ vector quantization
                           │                                    │ block-    ─┤ fractals
                           │                                    │ based      │
                           │                          location  │            └ BTC
                           │                          level ────┤
image                      │                ┌ still           ─ ┼ by area    ─ segmentation
coding ────────────────────┤                │ picture           │
                           │                │                   └ subimage ─ pyramid coding
                           └ transform ─────┤                   ┌ compo-   ── DCT
                                            │                    │ nent
                                            │          frequency │
                                            │          level ────┤
                                            │                    └ band     ─── subband coding
                                            │
                                            │          location
                                            │          frequency ─ wave set
                                            │          level
                                            │                   ┌ DPCM+DCT
                                            │          ┌ hybrid ─┤
                                            └ video ───┤         └ DCT+DPCM
                                                       └ 3D
```

Let us now study image signal filtering in greater detail. Figure 2 shows in the compression means 11 the most important processing blocks of an image signal generated in the camera 10. The arrangement comprises decimation means 20, pre-filtering means 21, coding means 22, a buffer 23 and adjustment means 24. The decimation means 20 decrease image signal sampling in accordance with prior art, thereby reducing the number of samples. The pre-filtering means 21 remove noise without blurring the edges of the image. At this stage even intense filtering does not cause as clearly noticeable interference patterns to the image as does decreasing the DCT components of block-based codecs. In the coding means 22 a pre-filtered image signal is subjected to coding which typically includes DCT transformation. The energy, i.e. high values, of a block which is used in the DCT transformation and can be of the size of the entire image or e.g. 8 x 8 pixels, are concentrated on a few DCT components while the values of the other components remain low. When quantization is used, most low values become zeroes, which reduces the bandwidth of the bit stream. A coded image signal is applied from the coding means 22 to the buffer 23, from which the signal is transmitted further to e.g. the transmission network. The buffer 23 is preferably an electronic memory circuit storing digital data. The decimation means 20, pre-filtering means 21 and coding means 22 can also be implemented as hardware solutions or in software by using electronic circuits. In the inventive solution the focus is particularly on compressing the luminance of the image signal.

Since the buffer 23 is able to store only a limited amount of image signal data, the buffer 23 may become filled if the image signal is not sufficiently compressed. The bit stream of an uncompressed image signal is typically 150 Mbps. For this purpose, the buffer 23 fill rate information is fed back in the inventive solution via the adjustment means 24 to the pre-filtering means 21, in which the information is filtered from the image signal to such a degree that the storage capacity of the buffer 23 will never be exceeded. This also ensures that the storage capacity of the buffer 23 is always optimally utilized.

A reference value, which is dependent on the pixel values of a pixel block associated either in place and/or time with a pixel, is generated for the image pixel in the pre-filtering means 21 in accordance with prior art. In the pre-filtering means 21, the pixel is further provided with a filtered value, which depends on the relation of the difference between the original pixel value and the generated reference value to a threshold value used in the filtering. These operations are preferably carried out separately for the pixels of each image area to be treated. In this case a pixel value keeps its original value only if the difference between the pixel value and the reference value exceeds the threshold value. Otherwise the original pixel value is replaced by the reference value. The difference can be measured absolute, e.g. as a difference, or relative, e.g. as a quotient. The reference value is typically an average value of a block or the entire image area, such as the mean or median. Median filters are non-linear and remove impulse noise from the image and similarly maintain sharp discontinuity points, such as edges. Block size is preferably 3 x 3 pixels in an area shaped as a square or a cross. In the inventive solution the adjustment means 24 change the pre-filtering threshold value according to the buffer 23 fill rate. The buffer 23 informs the adjustment means 24 of the storage space left in the buffer 23 or of the amount of storage space in use. The fuller the buffer 23, the higher will the adjustment means 24 change the threshold value, whereby more and more pixels deviate from the reference value by less than the threshold value, and are given the value of the reference value. This narrows the bandwidth of the image signal bit stream. If the pixel value is given by e.g. 8 bits, the threshold value may get values step-wise in the range of 0 to $2^8$, i.e. 0 to 256. When block-based video coding is used, each video coding block is separately pre-filtered utilizing motion estimation information. The inventive solution reduces the disturbance caused by the video source and video electronics, e.g. noise. Thus the solution improves the efficiency of coding and enables the use of a low-quality, i.e. even an inexpensive camera.

Figure 3 shows measurement results for different pre-filtering methods and thresholds. The vertical axis shows band saving compared with a non-pre-filtered situation. The horizontal axis shows the DCT quantization coefficient of the coding means 22. In all cases a 3 x 3 pixel block and median filtering have been used, of which plus-median filtering is separately mentioned. In plus-median filtering the selected pixels form a cross-shaped pattern, whereas in ordinary median filtering the selected pixels form a square area. The upper curve 30 represents a case where the threshold value was 18. In the case of curve 31, the threshold was 18, too, but the filtering was plus-median filtering. Curve 32 presents a measurement in which the threshold was 9 and plus-median filtering was used. Curve 33 also involves a threshold of 9. The pair of curves 34 and 35 involved a threshold of 0. Curve 34 involved plus-median filtering.

Although the invention has been described above with reference to the example according to the attached drawings, it is obvious that the invention is not restricted thereto, but can be varied in a variety of ways within the scope of the inventive idea disclosed in the attached claims.

### Claims

1. A video image band adjustment method in which an image, composed of pixels, is subjected to at least pre-filtering, coding and storage in a buffer (23) for further transmission, in which pre-filtering a reference value dependent on the pixel values in a pixel block associated with the pixel in location and/or in time is generated for the image pixel, and in which pre-filtering the filtered pixel value depends on the relation of the difference between the original pixel value and the generated reference value to a filtering threshold value, **characterized by** changing the pre-filtering threshold value according to the buffer (23) fill rate enabling a constant video image frequency.

2. A method as claimed in claim 1, **characterized in that** the original pixel value is maintained only if the difference between the pixel value and the reference value exceeds the threshold value, and otherwise the original pixel value is replaced with the reference value, and the fuller the buffer (23), the higher the threshold value used.

3. A method as claimed in claim 1, **characterized in that** when the buffer (23) fill rate is less than a predetermined value, the threshold value is kept at a fixed, predetermined value.

**4.** A method as claimed in claim 1, **characterized in that** median filtering or the like is used as the pre-filtering.

**5.** A method as claimed in claim 1, **characterized in that** filtering is performed only for the luminance components of the image.

**6.** A method as claimed in claim 1, **characterized in that** when block-based video coding is used, each video coding block is pre-filtered separately by utilizing motion estimation information.

**7.** A filter arrangement for optimizing the amount of image information, the arrangement comprising a pre-filter (21), coding means (22) and a buffer (23), which are arranged to perform at least pre-filtering, coding and storage in the buffer (23) for the image, composed of pixels, for further transmission, the pre-filter (21) being arranged to generate for the image pixel a reference value which is a function of the pixel values of a pixel block associated with the pixel in location and/or in time, and the filtered pixel value being a function of the difference between the original pixel value and the generated reference value and a filtering threshold value, **characterized by** comprising adjustment means (24) arranged to change the pre-filter threshold value according to the buffer (23) fill rate enabling a constant video image frequency.

**8.** A filter arrangement as claimed in claim 7, **characterized in that** the pre-filter (21) is arranged to maintain the original pixel value only if the difference between the pixel value and the reference value exceeds the threshold value, and otherwise the pre-filter (21) is arranged to replace the original pixel value with the reference value, and the fuller the buffer (23), the higher the threshold value the adjustment means (24) are arranged to generate.

**9.** A filter arrangement as claimed in claim 7, **characterized in that** when the buffer (23) fill rate is less than a predetermined value, the adjustment means (24) are arranged to keep the threshold value at a fixed, predetermined value.

**10.** A filter arrangement as claimed in claim 7, **characterized in that** the pre-filter (21) is arranged to use median filtering or the like.

**11.** A filter arrangement as claimed in claim 7, **characterized by** being arranged to perform the filtering only for the luminance components of the image.

**12.** A filter arrangement as claimed in claim 7, **characterized in that** when the coding means (22) are arranged to use block-based video coding, the pre-filter (21) is arranged to filter each block corresponding to the video coding separately by utilizing motion estimation information.


**Patentansprüche**

**1.** Bandanpassungsverfahren, bei dem ein Bild, das aus Pixeln zusammengesetzt ist, wenigstens einer Vorfilterung, Codierung und Speicherung in einem Puffer (23) zur weiteren Übertragung unterworfen wird, wobei durch die Vorfilterung für das Bildpixel ein Bezugswert in Abhängigkeit von den Pixelwerten in einem Pixelblock erzeugt wird, der dem Pixel bezüglich Lage und/oder Zeit zugeordnet ist, und wobei durch die Vorfilterung der gefilterte Pixelwert von der Differenz zwischen dem ursprünglichen Pixelwert und dem erzeugten Bezugswert, bezogen auf einen Filterschwellenwert, **dadurch gekennzeichnet, daß** der Vorfilterungsschwellenwert gemäß der Füllgeschwindigkeit des Puffers (23) geändert wird, um eine konstante Videobildfrequenz zu erreichen.

**2.** Verfahren nach Anspruch 1, **dadurch gekennzeichnet, daß** der ursprüngliche Pixelwert nur dann beibehalten wird, wenn die Differenz zwischen dem Pixelwert und dem Bezugswert den Schwellenwert übersteigt und daß anderenfalls der ursprüngliche Pixelwert durch den Bezugswert ersetzt wird und ein Schwellenwert verwendet wird, der um so höher liegt, je voller der Puffer 23 ist.

**3.** Verfahren nach Anspruch 1, **dadurch gekennzeichnet, daß** dann, wenn die Füllgeschwindigkeit des Puffers (23) unter einem vorbestimmten Wert liegt, der Schwellenwert auf einem fixen, vorbestimmten Wert gehalten wird.

**4.** Verfahren nach Anspruch 1, **dadurch gekennzeichnet, daß** die mittlere Filterung oder dergleichen als Vorfilterung benutzt wird.

**5.** Verfahren nach Anspruch 1, **dadurch gekennzeichnet, daß** die Filterung nur für die Lichtstärkenkomponenten des Bildes durchgeführt wird.

**6.** Verfahren nach Anspruch 1, **dadurch gekennzeichnet, daß** dann, wenn die blockgestützte Videocodierung benutzt wird, jeder Videocodierungsblock separat durch Benutzung von Bewegungsschätzungsinformationen vorgefiltert wird.

**7.** Filteranordnung zur Optimierung des Betrages der Bildinformation, wobei der Anordnung ein Vorfilter (21), eine Codierungseinrichtung (22) und einen Puffer (23) aufweist, die wenigstens die Vorfilterung, Codierung und Speicherung des aus Pixeln zusammengesetzten Bildes in dem Puffer (23) zur weiteren Übertragung bewirken, wobei der Vorfilter (21) für das Bildpixel einen Bezugswert erzeugt, der eine Funktion der Pixelwerte eines Pixelblocks ist, in dem die Pixel bezüglich Lage und/oder Zeit zugeordnet sind, und daß der gefilterte Pixelwert eine Funktion der Differenz zwischen dem ursprünglichen Pixelwert und dem erzeugten Bezugswert und einem Filterschwellenwert ist, **gekennzeichnet durch** eine Abstimmungseinrichtung (24), die den Vorfilterschwellenwert in Abhängigkeit von der Höchstgeschwindigkeit des Puffers (23) ändert, um eine konstante Videobildfrequenz zu ermöglichen.

**8.** Filteranordnung nach Anspruch 7, **dadurch gekennzeichnet, daß** das Vorfilter (21) so angeordnet ist, daß der ursprüngliche Pixelwert nur dann beibehalten wird. wenn die Differenz zwischen dem Pixelwert und dem Bezugswert den Schwellenwert übersteigt und daß anderenfalls das Vorfilter (21) so angeordnet wird, daß der ursprüngliche Pixelwert durch den Bezugswert ersetzt wird, wobei die Anpassungsvorrichtung (24) so angeordnet ist, daß ein um so höherer Schwellenwert erzeugt wird, je voller der Puffer (23) ist.

**9.** Filteranordnung nach Anspruch 7, **dadurch gekennzeichnet, daß** dann, wenndie Füllgeschwindigkeit des Puffers (23) geringer ist als der vorgegebene Wert, die Anpassungsvorrichtung (24) den Schwellenwert auf einem fixen, vorgegebenen Wert hält.

**10.** Filteranordnung nach Anspruch 7, **dadurch gekennzeichnet, daß** das Vorfilter (21) zur Benutzung einer mittleren Filterung oder dergleichen geeignet ist.

**11.** Filteranordnung nach Anspruch 7, **dadurch gekennzeichnet, daß** sie nur die Filterung der Lichtstärkenkomponenten des Bildes bewirkt.

**12.** Filteranordnung nach Anspruch 7, **dadurch gekennzeichnet, daß** dann, wenn die Codierungsvorrichtung (22) zur Verwendung einer blockgestützten Videocodierung dient, das Vorfilter (21) zur Filterung jedes Blocks entsprechend der getrennten Videocodierung unter Verwendung von Bewegungsschätzungsinformationen benutzt wird.


**Revendications**

**1.** Procédé d'ajustement de la bande d'images vidéo, selon lequel on soumet une image formée de pixels à au moins un pré-filtrage, un codage et un stockage dans une mémoire tampon (23) en vue d'une transmission ultérieure, lors du pré-filtrage une valeur de référence, qui dépend des valeurs de pixel dans un bloc de pixels associé au pixel, en position et/ou en temps, étant générée pour le pixel d'image, et la valeur de pixel filtrée dépendant de la relation de la différence entre la valeur de pixel originale et la valeur de référence générée à une valeur de seuil de filtrage, **caractérisé par** la modification de la valeur de seuil de pré-filtrage en fonction du taux de remplissage de la mémoire tampon (23) permettant une fréquence d'image vidéo constante.

**2.** Procédé selon la revendication 1, **caractérisé en ce que** la valeur de pixel originale est conservée seulement si la différence entre la valeur de pixel et la valeur de référence est supérieure à la valeur de seuil, **en ce que** dans les autres cas, la valeur de pixel originale est remplacée par la valeur de référence, et **en ce que** plus la mémoire tampon (23) est pleine et plus la valeur de seuil utilisée est élevée.

**3.** Procédé selon la revendication 1, **caractérisé en ce que** lorsque le taux de remplissage de la mémoire tampon (23) est inférieur à une valeur prédéterminée, la valeur de seuil est maintenue à une valeur fixe prédéterminée.

**4.** Procédé selon la revendication 1, **caractérisé en ce qu'**on utilise le filtrage médian ou similaire comme pré-filtrage.

**5.** Procédé selon la revendication 1, **caractérisé en ce que** le filtrage est réalisé uniquement pour les composantes de luminance de l'image.

6. Procédé selon la revendication 1, **caractérisé en ce que** lorsqu'on utilise un codage vidéo par blocs, chaque bloc de codage vidéo est pré-filtré séparément en utilisant des informations d'évaluation de mouvement.

7. Système de filtre pour optimiser la quantité d'informations d'image, le système comprenant un pré-filtre (21), des moyens de codage (22) et une mémoire tampon (23) qui sont prévus pour réaliser au moins un pré-filtrage, un codage et un stockage dans la mémoire tampon (23) de l'image formée de pixels, en vue de sa transmission, le pré-filtre (21) étant agencé pour générer, pour le pixel d'image, une valeur de référence qui est une fonction des valeurs de pixel d'un bloc de pixels associé audit pixel, en position et/ou en temps, la valeur de pixel filtrée étant une fonction de la différence entre la valeur de pixel originale et la valeur de référence générée à une valeur de seuil de filtrage, **caractérisé en ce qu'**il comprend des moyens d'ajustement (24) pour modifier la valeur de seuil du pré-filtre en fonction du taux de remplissage de la mémoire tampon (23) permettant une fréquence d'image vidéo constante.

8. Système de filtre selon la revendication 7, **caractérisé en ce que** le pré-filtre (21) est agencé pour conserver la valeur de pixel originale seulement si la différence entre la valeur de pixel et la valeur de référence est supérieure à la valeur de seuil, **en ce que** dans les autres cas le pré-filtre (21) remplace la valeur de pixel originale par la valeur de référence et **en ce que** les moyens d'ajustement (24) sont agencés pour générer une valeur de seuil d'autant plus élevée que plus la mémoire tampon (23) est plus remplie.

9. Système de filtre selon la revendication 7, **caractérisé en ce que** lorsque le taux de remplissage de la mémoire tampon (23) est inférieur à une valeur prédéterminée, les moyens d'ajustement (24) maintiennent la valeur de seuil à une valeur prédéterminée fixe.

10. Système de filtre selon la revendication 7, **caractérisé en ce que** lorsque le pré-filtre (21) est agencé de manière à utiliser le filtrage médian ou similaire.

11. Système de filtre selon la revendication 7, **caractérisé en ce qu'**il est prévu pour ne réaliser le filtrage que pour les composantes de luminance de l'image.

12. Système de filtre selon la revendication 7, **caractérisé en ce que** lorsque les moyens de codage (22) utilisent le codage vidéo par blocs, le pré-filtre est agencé pour filtrer séparément chaque bloc correspondant au codage vidéo en utilisant l'information d'évaluation de mouvement.

FIG. 1

FIG. 2

FIG. 3